# EUROPÄISCHE PATENTSCHRIFT

(11) **EP 2 510 791 B1**
(45) Veröffentlichungstag und Bekanntmachung des Hinweises auf die Patenterteilung: **03.06.2020**
(21) Anmeldenummer: 12160579.4
(22) Anmeldetag: 21.03.2012
(51) Int. Cl.: A21C 3/02

(54) **Vorrichtung zur Formung eines Teigbandes aus zugeführten Teigportionen**
Device for forming a sheet of dough from supplied dough portions
Dispositif de formage d'une bande de pâte à partir de portions de pâtes alimentées

(30) Priorität: 13.04.2011 DE 102011007294
(43) Veröffentlichungstag der Anmeldung: 17.10.2012
(73) Patentinhaber: WP Kemper GmbH, 33397 Rietberg (DE)
(72) Erfinder: Engelmeier, Christian, 33397 Rietberg (DE)
(74) Vertreter: Rau, Schneck & Hübner Patentanwälte Rechtsanwälte PartGmbB

(56) Entgegenhaltungen:
- WO-A1-2010/062172
- DE-B4- 4 424 461
- DE-T2- 69 021 702
- GB-A- 860 154

## Beschreibung

Die Erfindung betrifft eine Vorrichtung zur Formung eines Teigbandes aus zugeführten Teigportionen.

Bei einer bekannten derartigen Formungsvorrichtung werden über eine Teigportions-Zuführeinrichtung zunächst voneinander getrennte Teigportionen der Formungsvorrichtung zugeführt. Ferner ist aus der DE 44 24 461 B4 eine Vorrichtung zum Extrudieren von essbarem Teig bekannt, bei der der Teig in Form eines Extrudats, also nicht in Form von Teigportionen, der Formung zugeführt wird. Weitere Teigband-Bearbeitungsvorrichtungen sind bekannt aus der DE 295 04 505 U1, der DE 202 12 725 U1, der DE 102 13 015 B4, der DE 10 2006 055 111 A1, der DE 6 901 464 U, der DE-PF 950 521, der DE 8 535 716 U1, der DE 69 021 702 T2, der DE 690 21 702 T2, der WO 2010/062172 A1 sowie aus der GB 860,154. Die DE 4 342 519 C1 zeigt Teigwalzen zur Teigstückformung.

Es ist Aufgabe der vorliegenden Erfindung, eine Formungsvorrichtung der eingangs genannten Art derart weiterzubilden, dass eine gut reproduzierbare und hohe Qualität des ausgewalzten Teigbandes resultiert.

Diese Aufgabe ist erfindungsgemäß gelöst durch eine Formungsvorrichtung mit den im Anspruch 1 angegebenen Merkmalen.

Erfindungsgemäß wurde erkannt, dass eine Umschlingung zweier Hauptwalzen mit einem zwischenliegenden Wendepunkt, also beispielsweise eine S-förmige Umschlingung, zur Möglichkeit führt, das Teigband so auszuwalzen, dass beide Bandseiten in gleicher Weise einmal außen und einmal innen auf einer der beiden Hauptwalzen zu liegen kommen. Das gesamte Teigband erfährt in diesem Fall eine Walzbeanspruchung mit vergleichbaren Walzbedingungen. Die Umschlingung der Hauptwalzen durch das Teigband kann über jeweils praktisch den halben Umfang der Hauptwalzen erfolgen, so dass eine Umschlingung praktisch über zwei Hauptwalzen-Halbkreise erfolgt. Der Umschlingungswinkel ist dabei derjenige Umfangswinkel eines Hauptwalzen-Mantelwandabschnittes, auf dem das Teigband bei seiner Führung längs des Teig-Bearbeitungsweges unter einem Anpressdruck aufliegt. Der Umschlingungswinkel ist daher immer größer als derjenige Winkel in Umfangsrichtung zwischen Drehachsen von längs des Teig-Bearbeitungsweges ersten und letzten Gegen-Andrückwalzen, die der jeweils betrachteten Hauptwalze zugeordnet sind. Soweit nur jeweils eine Gegen-Andrückwalze der jeweils betrachteten Hauptwalze zugeordnet ist, ist der zuletzt betrachtete Winkel 0. Der im Vergleich zum Stand der Technik große Umschlingungswinkel gewährleistet eine effektive Walzwirkung des Teig-Walzwerks. Beispielsweise eine letzte der Gegen-Andrückwalzen vor der Teigband-Abführeinrichtung kann als Messerwalze zum Längsschneiden des Teigbandes ausgeführt sein. Die beiden Hauptwalzen, bei denen der Teig-Umschlingungswinkel größer als 90 ° vorliegt, können im Förderweg des Teigbandes direkt hintereinander angeordnet sein, also so, dass keine Walzenpaare zwischen diesen Hauptwalzen angeordnet sind. Auch dies trägt zur Optimierung vergleichmäßigter Walzbedingungen bei. Der Teig-Umschlingungswinkel um mindestens eine der beiden Hauptwalzen kann größer sein als 100°, kann größer sein als 110°, kann größer sein als 120°, kann größer sein als 150° und kann sogar 180° betragen. Mindestens einer der Hauptwalzen ist eine Mehrzahl von im Teig-Bearbeitungsweg hintereinander angeordneten Gegen-Andrückwalzen zugeordnet. Derartige, mehrere Gegen-Andrückwalzen stellen eine Möglichkeit zur Gewährleistung eines großen Umschlingungswinkels um die Hauptwalzen dar. Beiden Hauptwalzen kann eine Mehrzahl von Gegen-Andrückwalzen zugeordnet sein.

Ein Abstandsverhältnis nach Anspruch 2 ermöglicht eine stufenweise Stärkenreduzierung des gewalzten Teigbandes und damit eine schonende Bearbeitung von diesem. Einer der Hauptwalzen oder auch beiden Hauptwalzen können mehrere, beispielsweise vier Gegen-Andrückwalzen mit stufenweise sich verkleinerndem Abstand zur Hauptwalze zugeordnet sein.

Ein gemeinsamer Walzenantrieb nach Anspruch 3 verringert den Kostenaufwand bei der Herstellung der Formungsvorrichtung. Eine Zwangsabstimmung der Walzenbewegungen ist auf diese Weise möglich.

Unabhängig nach Anspruch 4 steuerbar angetriebene Walzen ermöglichen eine Teigstrombeeinflussung längs des Teig-Bearbeitungsweges und damit eine vorgegebene Zugwirkung auf das Teigband, welche zur definierten Teigbeanspruchung genutzt werden kann.

Mindestens ein Sensor nach Anspruch 5 ermöglicht eine Teigstromkontrolle. Es können mehrere längs des Bearbeitungsweges voneinander beabstandete Sensoren vorgesehen sein. Diese Sensoren können zwischen den Wegabschnitten den Teigstrom messen, in denen der Teig zwischen voneinander unabhängig steuerbar angetriebenen Walzen geführt ist. Die Sensoren können insbesondere am Beginn und/oder am Ende derartiger Wegabschnitte angeordnet sein. Hierüber sind durch Messung des Teigstromes durch die Sensoren eine Regelung der Winkelgeschwindigkeit der Walzen und/oder die Regelung einer Weite eines Durchlasses zwischen Walzen möglich, zwischen denen das Teigband beim Walzen hindurchgeführt wird. Die Walzbedingungen und auch das Walzergebnis können auf diese Weise fein beeinflusst werden.

Eine Bemehlungseinrichtung nach Anspruch 6 vermeidet, dass der Teig unerwünscht an den Walzen haften bleibt. Zur Bemehlung zumindest einiger der Walzen kann ein Abstreifer vorgesehen sein, der Teig längs des Förderweges von Förderkomponenten, beispielsweise von einem Förderband der Teigportion-Zuführeinrichtung, abstreift. Ein solcher Abstreifer ist eine kostengünstige Variante oder ein kostengünstiger Bestandteil einer Bemehlungseinrichtung.

Mindestens eine der Walzen mindestens eines Walzen-Paares, zwischen denen der Teig hindurchgeführt wird, kann nach Anspruch 7 mit konkav ausgeführter Mantelfläche ausgeführt sein. Eine derart konkave Ausführung zumindest einer der Walzen-Mantelflächen zu einer Zentrierung der Teigbandführung führt. Das Teigband zentriert sich hin zu derjenigen Position, wo zwischen den Walzen eines Walzen-Paares aufgrund der konkaven Ausführung der mindestens einen Mantelfläche der größte Abstand vorliegt. Der Teig wird bandförmig zwischen den Walzen des mindestens einen Walzen-Paares hindurchgeführt. Eine reproduzierbare Teigbandführung ist mit einer derartigen Vorrichtung gewährleistet.

Ein Randwinkel nach Anspruch 8 hat sich für die Zentrierwirkung als geeignet und ausreichend herausgestellt. Der Randwinkel kann größer sein als 5 °, kann im Bereich von 10 ° liegen oder kann auch noch größer sein. Der Randwinkel ist der Winkel zwischen einer Tangente an einem Randpunkt der Mantelfläche bei einem Längsschnitt der betrachteten Walze einerseits und einer Walzen-Drehachse andererseits.

Eine Ausführung nach Anspruch 9 führt zu einer besonders guten Zentrierwirkung. Auch Walzen-Paare mit einer konkav und einer plan ausgeführten Mantelfläche sind beispielsweise möglich und gewährleisten eine Zentrierwirkung.

Ein Ausführungsbeispiel der Erfindung wird nachfolgend anhand der Zeichnung näher erläutert. In dieser zeigen:
- Fig. 1: in einer innere Details preisgebenden, schematischen Seitenansicht eine Vorrichtung zur Formung eines Teigbandes aus zugeführten Teigportionen in Form eines Walzenstuhls;
- Fig. 2: einen Schnitt durch das durch den Walzenstuhl geförderten Teigbandes gemäß Linie II in Fig. 1;
- Fig. 3: in einer zu Fig. 2 ähnlichen Darstellung einen Schnitt gemäß Linie III in Fig. 1;
- Fig. 4: in einer zu Fig. 2 ähnlichen Darstellung einen Schnitt gemäß Linie IV in Fig. 1;
- Fig. 5: in einer zu Fig. 2 ähnlichen Darstellung einen Schnitt gemäß Linie V in Fig. 1;
- Fig. 6: in einer zu Fig. 2 ähnlichen Darstellung einen Schnitt gemäß Linie VI in Fig. 1;
- Fig. 7: in einer zu Fig. 2 ähnlichen Darstellung einen Schnitt gemäß Linie VII in Fig. 1;
- Fig. 8: in einer zu Fig. 2 ähnlichen Darstellung einen Schnitt gemäß Linie VIII in Fig. 1; und
- Fig. 9: in einer zu Fig. 2 ähnlichen Darstellung einen Schnitt gemäß Linie IX in Fig. 1.

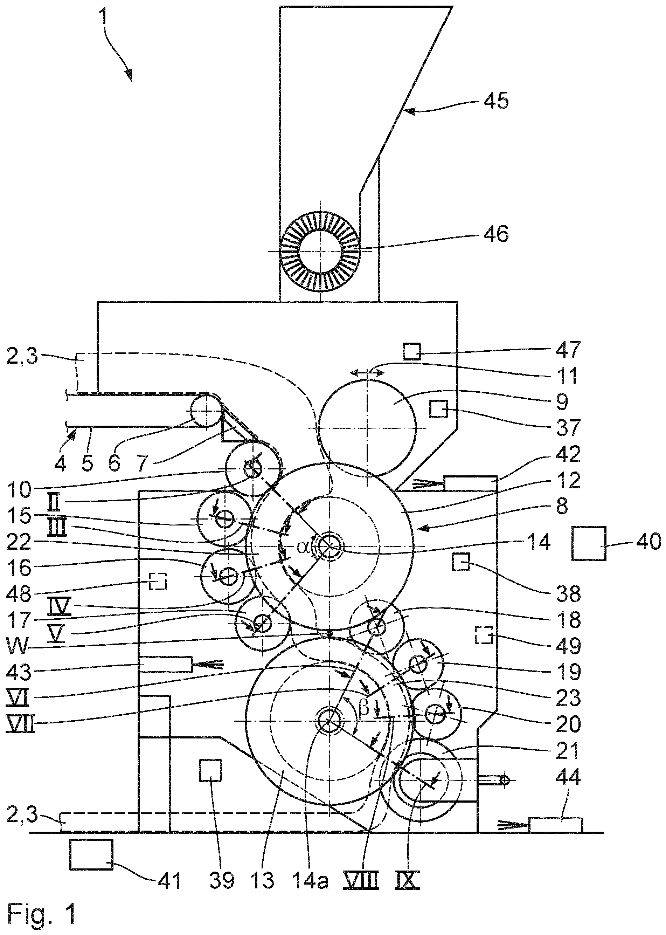

Eine Vorrichtung 1 zur Formung eines Teigbandes 2 aus zugeführten Teigportionen ist in der Figur 1 in einer Seitenansicht dargestellt, die den Blick auf innere Details freigibt. Die Vorrichtung 1 wird auch als Walzenstuhl bezeichnet. Ein Teig-Bearbeitungsweg des Teigbandes 2 ist in der Figur 1 gestrichelt angedeutet.

Die Formungsvorrichtung 1 hat eine Teigportions-Zuführeinrichtung in Form eines Endlos-Förderbandes 5, das über eine Antriebs-Umlenkwalze 6 und eine in der Zeichnung nicht dargestellte weitere Umlenkwalze geführt ist. Im Bereich einer Umlenkung des Förderbandes 5 an der Antriebs-Umlenkwalze 6 läuft das Förderband 5 in sehr geringem Abstand an einer Abstreiferkante eines Abstreifers 7 vorbei, der den Teig sowie überschüssiges Mehl von der Förderfläche des Förderbandes 5 abstreift.

Im Bearbeitungsweg 3 nach dem Abstreifer 7 hat die Formungsvorrichtung 1 ein Teig-Walzwerk 8. Zuführseitig hat das Teig-Walzwerk 8 zunächst ein Andrückwalzenpaar mit einer verstellbaren Andrückwalze 9 und einer Gegen-Andrückwalze 10. Eine Zuführweite des Bearbeitungsweges 3 ist über eine horizontale Verstellbarkeit der verstellbaren Andrückwalze 9 (vgl. Doppelpfeil 11) vorgebbar. Über die Verstellbarkeit 11 lässt sich ein Teigstrom in einem Zuführabschnitt des Bearbeitungsweges 3 einstellen. Im Bearbeitungsweg 3 nach dem Andrückwalzenpaar mit den Andrückwalzen 9, 10 hat das Walzwerk 8 zwei übereinander angeordnete Hauptwalzen 12, 13, die um voneinander beabstandete und vertikal übereinander liegende horizontale Drehachsen 14, 14a drehbar sind. Der im Bearbeitungsweg 3 ersten Hauptwalze 12 sind insgesamt vier Gegen-Andrückwalzen, nämlich die eingangsseitige Andrückwalze 10 und im weiteren Bearbeitungsweg 3 nacheinander drei weitere Gegen-Andrückwalzen 15, 16, 17 zugeordnet. Der im Bearbeitungsweg 3 zweiten Hauptwalze 13 sind vier weitere Gegen-Andrückwalzen 18, 19, 20, 21 zugeordnet, die in der Reihenfolge ihrer Anordnung im Bearbeitungsweg 3 nummeriert sind. Die letzte Gegen-Andrückwalze 21 stellt gleichzeitig eine Messerwalze zum Längsschneiden des fertig gewalzten Teigbandes 2 dar. Die Gegen-Andrückwalzen 10 sowie 15 bis 21 sind ihrerseits um horizontale Drehachsen drehbar, die voneinander beabstandet sind.

Die Walzen-Drehachsen verlaufen senkrecht zur Zeichenebene der Figur 1.

Die beiden Hauptwalzen 12, 13 geben zusammen mit den Gegen-Andrückwalzen 10 sowie 15 bis 21 den Teig-Bearbeitungsweg 3 derart vor, dass das Teigband 2 zunächst zwischen einem ersten Andrückabschnitt 22 zwischen der ersten Hauptwalze 12 und den Gegen-Andrückwalzen 10 sowie 15 bis 17 und anschließend in einem zweiten Andrückabschnitt 23 zwischen der zweiten Hauptwalze 13 und den weiteren Gegen-Andrückwalzen 18 bis 21 geführt ist. Längs der beiden Andrückabschnitte 22, 23 verläuft das Teigband 2 in der Seitenansicht nach Figur 1 S-förmig. Im Verlauf zwischen den Hauptwalzen 12, 13 hat der Teig-Bearbeitungsweg 3 also einen Wendepunkt W.

Die Drehachsen der Gegen-Andrückwalzen 10 und 17 einerseits sowie der Gegen-Andrückwalze 18 und 21 andererseits sind in Umfangsrichtung um die erste Hauptwalze 12 einerseits und um die zweite Hauptwalze 13 andererseits um einen Winkel α einerseits und β andererseits zueinander beabstandet angeordnet. Diese Umfangswinkel α und β betragen jeweils etwa 90 °. Ein Umschlingungswinkel des Teigbandes 2 um die Hauptwalzen 12 und 13 ist daher jeweils größer als 90 °. Der Umschlingungswinkel ist dabei derjenige Umfangswinkel eines Hauptwalzen-Mantelwandabschnitts, auf dem das Teigband 2 bei seiner Führung längs des Teig-Bearbeitungswegs 3 unter einem Anpressdruck, angepresst über die jeweiligen Gegen-Andrückwalzen 10, 15 bis 17 und 18 bis 21, aufliegt.

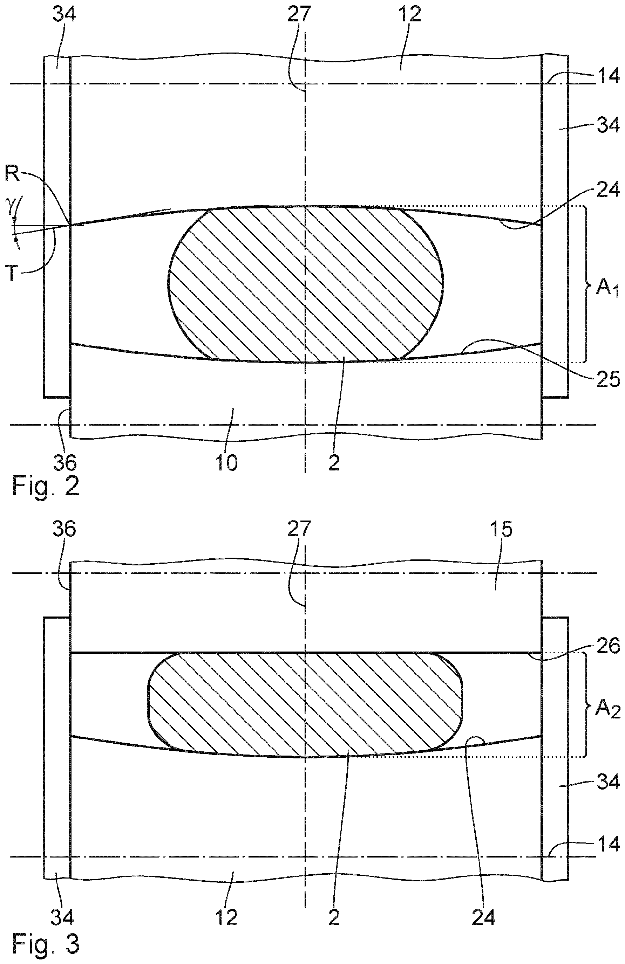

Ein Abstand A₁ zwischen einer Mantelwand 24 der Hauptwalze 12 und einer Mantelwand 25 der ersten Gegen-Andrückwalze 10 (vgl. Figur 2) ist größer als ein Abstand A₂ zwischen der Mantelwand 24 der Hauptwalze 12 und einer Mantelwand 26 der im Teig-Bearbeitungsweg 3 nachfolgenden Gegen-Andrückwalze 15 (vgl. Figur 3).

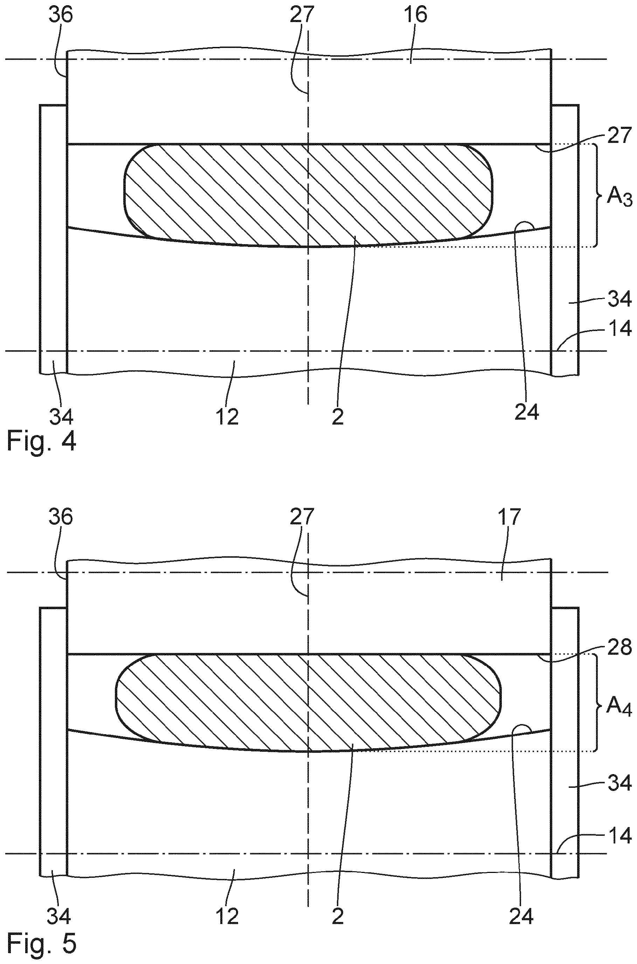

Die Abstände A₁, A₂ werden dabei längs einer Mittelebene 27 gemessen, die eine Spiegel-Symmetrieebene des Walzwerks 8 senkrecht zu den Walzen-Drehachsen darstellt. Dies gilt auch für die nachfolgend im Zusammenhang mit den Figuren 4 bis 9 noch beschriebenen Walzenabstände.

Auch die Abstände A₃, A₄ zwischen der Mantelwand 24 und den Mantelwänden 27, 28 der Gegen-Andrückwalzen 16, 17 sind jeweils kleiner als der Abstand A₂. Es gilt: A₁ > A₂ > A₃ > A₄. Es gilt also, dass der Abstand zwischen der Mantelwand 24 der ersten Hauptwalze 12 und einer im Bearbeitungsweg 3 vorausgehenden Gegen-Andrückwalze größer ist als der Abstand zwischen der Mantelwand 24 der Hauptwalze 12 und einer jeweils im Bearbeitungsweg 3 nachfolgenden Gegen-Andrückwalze. Dies wird aus der Sequenz der Figuren 2 bis 5 deutlich.

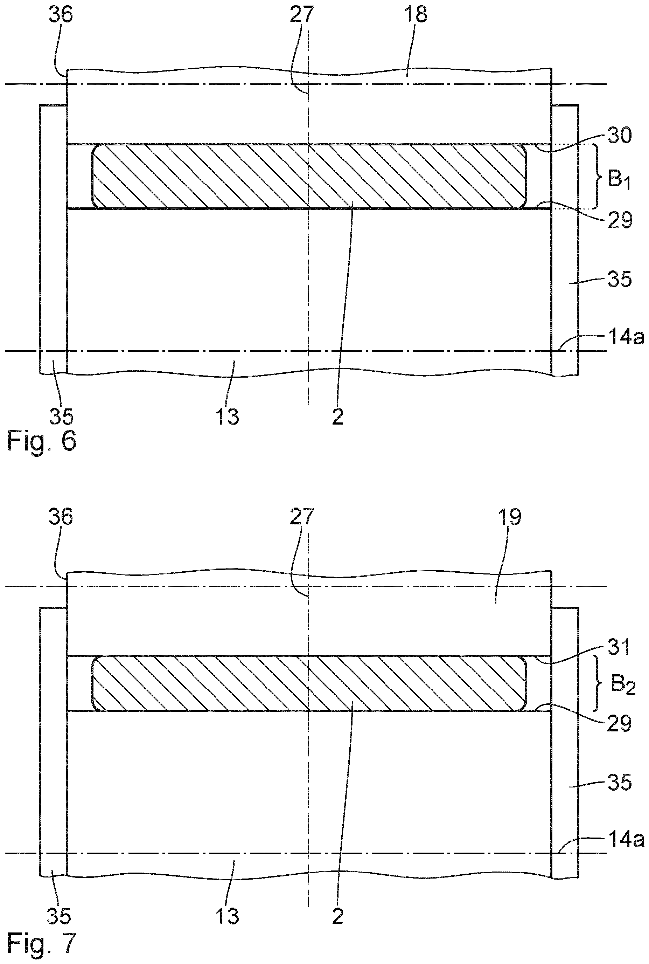

Eine entsprechende stufenweise Verkleinerung der Abstände gilt, wie die Sequenz der Figuren 6 bis 9 deutlich macht, für die Abstände B₁ bis B₄ zwischen einer Mantelwand 29 der zweiten Hauptwalze 13 und Mantelwänden 30, 31, 32 und 33 der Gegen-Andrückwalzen 18 bis 21. Hier gilt also B₁ > B₂ > B₃ > B₄. Zudem gilt A₄ > B₁.

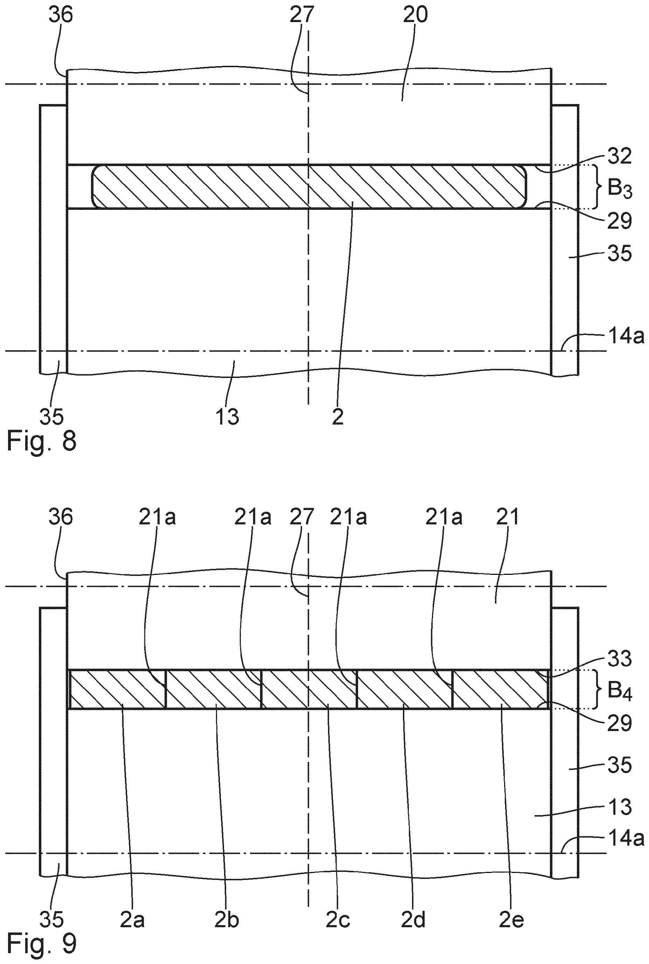

Die Messerwalze 21 hat eine Mehrzahl von in Umfangsrichtung verlaufenden Längsschneide-Messern 21a, die, zusammenwirkend mit der Mantelwand 30 der zweiten Hauptwalze 13, das Teigband 2 in Längs-Teilbänder 2a, 2b, 2c, 2d und 2e unterteilen (vgl. Figur 9). Dargestellt sind insgesamt vier äquidistant angeordnete Längsschneide-Messer 21a. Auch eine andere Messeranzahl oder ein anderes Abstandsverhältnis zwischen den Längsschneide-Messern 21a ist möglich.

Im Anschluss an die jeweilige Mantelwand 24, 29 haben die Hauptwalzen 12, 13 parallel zur Mittelebene 27 verlaufende Seitendeckel 34, 35, die rund sind und deren Radius so groß ist, dass die Seitendeckel 34, 35 abschnittsweise mit Seitenwänden 36 der Gegen-Andrückwalzen 10, 15 bis 17 sowie 18 bis 21 überlappen. Längs des Bearbeitungsweges 3 wird zwischen den Hauptwalzen 12, 13 und den Gegen-Andrückwalzen 10, 15 bis 17 sowie 18 bis 21 also jeweils ein das Teigband 2 bereichsweise rundum umschließender Bearbeitungsabschnitt vorgegeben, wie die Figuren 2 bis 9 zeigen.

Die beiden Andrückwalzen 9, 10 des führenden Andrückwalzenpaares werden von einem gemeinsamen Walzenantrieb 37 angetrieben, der in der Figur 1 schematisch dargestellt ist. Auch die Antriebs-Umlenkwalze 6 wird vom Walzenantrieb 37 angetrieben. Die erste Hauptwalze 12 und die Gegen-Andrückwalzen 15 bis 17 werden von einem weiteren Walzenantrieb 38, der ebenfalls in der Figur 1 schematisch dargestellt ist, gemeinsam angetrieben. Die weitere Hauptwalze 13 sowie die Gegen-Andrückwalzen 18 bis 21 werden von einem weiteren Walzenantrieb 39, der in der Figur 1 schematisch dargestellt ist, ebenfalls gemeinsam angetrieben. Die drei Walzenantriebe 37, 38, 39 können unabhängig voneinander von einer zentralen Steuereinrichtung 40 angesteuert werden. Längs des Bearbeitungsweges 3 liegen also mehrere Steuer-Wegabschnitte vor, in denen der Teig zwischen voneinander unabhängig steuerbar angetriebenen Walzen geführt ist. Ein erster dieser Wegabschnitte endet nach dem Andrückwalzenpaar mit den führenden Andrückwalzen 9, 10. Es schließt sich der nächste dieser Wegabschnitte an, der am Wendepunkt W endet. Es folgt ein weiterer dieser Wegabschnitte bis zum Ausgang der Formungsvorrichtung 1.

Dem Teig-Walzwerk 8 nachgeordnet ist im Bearbeitungsweg 3 eine Teigband-Abführeinrichtung 41 zum Abführen des gewalzten und längs geschnittenen Teigbandes 2. Die Teigband-Abführeinrichtung 41 kann als Endlos-Förderband nach Art des Förderbandes 5 ausgebildet sein. Ein Antrieb für die Teigband-Abführeinrichtung 41 erfolgt unabhängig vom Walzenantrieb 39.

Die Formungsvorrichtung 1 hat einen ersten Abstandssensor 42 zur optischen Erfassung des Teigbandes 2 nach dem Andrückwalzenpaar mit den Andrückwalzen 9, 10, also am Übergang der beiden vorstehend angesprochenen Steuer-Wegabschnitte. Über den ersten Distanzsensor 42 ist also eine Bestimmung eines Teigstromes im ersten Steuer-Wegabschnitt möglich.

Die Formungsvorrichtung 1 hat einen weiteren Abstandssensor 43, der einen Abstand zum Teigband 2 im Bereich des Wendepunktes W, also am Übergang zwischen dem zweiten und dem dritten Steuer-Wegabschnitt misst. Mit dem Abstandssensor 43 ist also eine Bestimmung des Teigstromes durch den zweiten Steuer-Wegabschnitt möglich.

Die Formungsvorrichtung 1 hat einen dritten Abstandssensor 44, der einen Abstand zum Teigband 2 im Bearbeitungsweg 3 nach der Messerwalze 21 misst. Mit dem dritten Abstandssensor 44 ist also eine Bestimmung des Teigstromes im dritten Steuer-Wegabschnitt möglich.

Die drei Abstandssensoren 42 bis 44 sind als optische Sensoren ausgebildet. Die drei Sensoren 42 bis 44 sind zur Bestimmung einer Lage des Teigbandes 2 längs des Bearbeitungsweges 3 in der Lage.

Die Sensoren 42 bis 44 stehen in nicht näher dargestellter Weise mit der Steuereinrichtung 40 in Signalverbindung.

Die Fördervorrichtung 1 hat weiterhin eine Bemehlungseinrichtung 45 zur Bemehlung der Walzen 9, 12, 13 sowie 18 bis 21. Die Bemehlungseinrichtung 45 hat eine angetriebene Mehl-Dosierwalze 46, über die Mehl aus einem Mehlbehälter unter Schwerkrafteinfluss den Walzen zugeführt wird.

Die Mantelflächen 24, 25 der ersten Hauptwalze 12 sowie der Gegen-Andrückwalze 10 sind konkav ausgeführt. Ein Randwinkel y, also ein Winkel zwischen einer Tangente T an einem Randpunkt R eines Walzen-Längsschnitts (vgl. Figur 2) und der Drehachse 14, beträgt beim dargestellten Ausführungsbeispiel etwa 10 °. Auch andere Randwinkel im Bereich zwischen 2 ° und 20 ° oder auch noch größere Randwinkel sind möglich.

Die konkave Gestaltung der Mantelflächen 24, 25 führt zu einer Zentrierung des Teigbandes 2 im Bereich der Mittelebene 27. Der Zentriereffekt ist dort, wo die beiden konkaven Walzen 10, 12 direkt zusammenwirken, am größten. Dort, wo die konkave Mantelwand 24 der Hauptwalze 12 mit den plan ausgeführten Mantelwänden 26 bis 28 der Gegen-Andrückwalzen 15 bis 17 zusammenwirkt, liegt ebenfalls noch ein Zentriereffekt vor.

Die weiteren Mantelwände 29 sowie 30 bis 33 der zweiten Hauptwalze 13 und der Gegen-Andrückwalzen 18 bis 21 sind plan, also weder konkav noch konvex, ausgeführt.

Die Formungsvorrichtung 1 arbeitet folgendermaßen: Teig wird in Teigportionen, die aus einem Teigvorrat als zunächst zueinander getrennte Portionen vorgegeben und abschnittsweise längs des Bearbeitungsweges 3 übereinander gelegt werden, der Formungsvorrichtung 1 mit der Zuführeinrichtung 4 zugeführt. Der Abstreifer 7 streift nicht nur den Teig vom Förderband 5 ab, sondern auch das überschüssige Mehl und sorgt dabei für eine Bemehlung der Walzen 10, 15 bis 17 und der ersten Hauptwalze 12. Ein zuführseitiger Teigstrom wird über die Verstellung der Andrückwalzen 9 längs des Verstellweges 11 und über eine Fördergeschwindigkeit des Walzenantriebs 37 vorgegeben, wobei ein Teigstrom-Istwert über den Abstandssensor 42 gemessen und durch Abgleich mit einem vorgegebenen Teigstrom-Sollwert über die Steuereinrichtung 40 auf den Sollwert geregelt werden kann. Hierzu steht die Steuereinrichtung 40 nur mit dem Walzenantrieb 37, sondern auch mit einem Verstellantrieb 47 zur Verstellung der Walze längs des Verstellweges 11 in Signalverbindung. Das auf die erste Hauptwalze 12 einlaufende Teigband 2 wird aufgrund der konkaven Gestaltung der Mantelwände 24, 25 hin zur Mittelebene 27 zentriert. Nun wird das Teigband 2 durch die Sequenz der Gegen-Andrückwalzen 10 sowie 15 bis 17 vorgeformt, wobei das Teigband 2 aufgrund des stufenweise kleiner werdenden Abstandes A₁ bis A₄ zwischen der Hauptwalze 12 und den Gegen-Andrückwalzen 10 sowie 15 bis 17 vor-ausgewalzt. Nach dem Umschlingungswinkel um die erste Hauptwalze 12 verläuft das Teigband 2 längs dem Bearbeitungsweg 3 zunächst über den Wendepunkt W zwischen den beiden Hauptwalzen 12, 13. In diesem Bereich wird der Teigstrom des vorgeformten Teigbandes 2 über den Abstandssensor 43 erneut gemessen. Über die Drehgeschwindigkeit der Hauptwalze 12 und der Gegen-Andrückwalzen 15 bis 17, die über den Walzenantrieb 38 vorgegeben wird, kann eine Zugwirkung auf das vorzuformende Teigband 2 eingestellt werden. Der über den Abstandssensor 43 gemessene Teigstrom-Istwert des vorgeformten Teigbandes kann über den Walzenantrieb 38, gesteuert über die Steuereinrichtung 40, auf einen Teigstrom-Sollwert geregelt werden. Im Anschluss an die Vorformung tritt das Teigband 2 nach dem Wendepunkt W in die Umschlingung um die Hauptwalze 13 ein, wo über die Sequenz der Gegen-Andrückwalzen 18 bis 21 eine End-Auswalzung des Teigbandes 2 stattfindet. Das Teigband 2 durchläuft hierbei die sich stufenweise verringernden Abstandsbereiche mit den Abständen B₁ bis B₄ zwischen der Hauptwalze 13 und den Gegen-Andrückwalzen 18 bis 21. Diese Walzen haben plane Mantelwände 29 bis 33, so dass das Teigband 2 gleichmäßig stark ausgewalzt und dann längsgeschnitten wird. Ein Teigstrom-Istwert des fertig ausgewalzten Teigbandes 2 wird mit dem Abstandssensor 44 gemessen und kann über den Walzenantrieb 39, geregelt über die Steuereinrichtung 40, auf einen Teigstrom-Sollwert geregelt werden. Über den Walzenantrieb 39 kann eine Zugwirkung des Walzwerks 8 auf das Teigband 2 im Bereich des Wendepunktes W vorgegeben werden. Auch die Zugwirkungen können über die Steuereinrichtung 40 anhand der Messergebnisse der Abstandssensoren 42 bis 44 geregelt werden.

Die S-Form des Bearbeitungsweges 3 im Bereich der beiden Hauptwalzen 12, 13 gewährleistet eine gleichmäßige Teigbeanspruchung während des Walzvorganges von beiden Seiten des Teigbandes 2 her.

Bei einer Variante der Formungsvorrichtung 1 sind auch die Abstände zwischen den Drehachsen 14, 14a der Hauptwalzen 12, 13 einerseits und den Drehachsen der Gegen-Andrückwalzen 10, 15 bis 17 sowie 18 bis 21 andererseits angetrieben verstellbar. Die Positionen der Drehachsen der Gegen-Andrückwalzen 10 sowie 15 bis 17 sind hierbei über einen in der Figur 1 gestrichelt angedeuteten Verstellantrieb 48 und die Abschnitte der Drehachsen der Gegen-Andrückwalzen 18 bis 21 über einen weiteren, ebenfalls gestrichelt angedeuteten Verstellantrieb 49 senkrecht zum jeweiligen Achsverlauf einstellbar. Anstelle zweier Verstellantriebe 48, 49 kann auch ein einziger Verstellantrieb zum Einsatz kommen, der die Verstellung der Abstände zwischen den Drehachsen 14, 14a der Hauptwalzen 12, 13 einerseits und den Drehachsen der Gegen-Andrückwalzen 10, 15 bis 17 sowie 18 bis 21 andererseits bewerkstelligt. Durch diese Achsen-Abstandsverstellung kann die Walzwirkung der Gegen-Andrückwalzen 10, 15 bis 17 sowie 18 bis 21 auf das Teigband 2 abhängig von den gemessenen Teigstrom-Istwerten gegebenenfalls geregelt beeinflusst werden.

18 bis 21 auf das Teigband 2 abhängig von den gemessenen Teigstrom-Istwerten gegebenenfalls geregelt beeinflusst werden.

## Patentansprüche

1. Vorrichtung (1) zur Formung eines Teigbandes (2) aus zugeführten Teigportionen
- mit einer Teigportions-Zuführeinrichtung (4),
- mit einem Teig-Walzwerk (8),
- mit einer Teigband-Abführeinrichtung (41),
- wobei das Teig-Walzwerk (8) mindestens zwei übereinander angeordnete Hauptwalzen (12, 13) aufweist, die sich um horizontale Drehachsen (14, 14a) drehen,
- wobei die Hauptwalzen (12, 13) einen Teig-Bearbeitungsweg (3) derart vorgeben,
- - dass das Teigband (2) zunächst in einem Andrückabschnitt zwischen einer ersten Hauptwalze (12) und mindestens einer Gegen-Andrückwalze (10, 15 bis 17) und anschließend in einem weiteren Andrückabschnitt zwischen einer zweiten Hauptwalze (13) und mindestens einer weiteren Gegen-Andrückwalze (18 bis 21) geführt ist,
- - dass der Teig-Bearbeitungsweg (3) im Verlauf zwischen den Hauptwalzen (12, 13) einen Wendepunkt (W) aufweist, und
- - dass ein Teig-Umschlingungswinkel (α, β) um jede der beiden Hauptwalzen (12, 13) größer ist als 90 °,
- **dadurch gekennzeichnet, dass** die Vorrichtung (1) zur Formung des Teigbandes (2) so ausgebildet ist, dass beim Auswalzen des Teigbandes (2) beide Bandseiten in gleicher Weise einmal außen und einmal innen auf einer der beiden Hauptwalzen (12, 13) zu liegen kommen, wobei mindestens einer der Hauptwalzen (12, 13) eine Mehrzahl von im Teig-Bearbeitungsweg (3) hintereinander angeordneten Gegen-Andrückwalzen (10, 15 bis 17; 18 bis 21) zugeordnet ist.

2. Vorrichtung nach Anspruch 1, **dadurch gekennzeichnet, dass** ein Abstand (A₁ bis A₄; B₁ bis B₄) zwischen der Hauptwalze (12, 13) und einer im Teig-Bearbeitungsweg (3) führenden Gegen-Andrückwalze (10; 18) größer ist als der Abstand zwischen der Hauptwalze (12, 13) und einer im Teig-Bearbeitungsweg (3) nachfolgenden Gegen-Andrückwalze (15 bis 17; 19 bis 21).

3. Vorrichtung nach Anspruch 1 oder 2, **dadurch gekennzeichnet, dass** mehrere Gegen-Andrückwalzen (15 bis 17; 18 bis 21), die einer der Hauptwalzen (12, 13) zugeordnet sind, über einen gemeinsamen Walzenantrieb (38, 39) drehantreibbar sind.

4. Vorrichtung nach einem der Ansprüche 1 bis 3, **dadurch gekennzeichnet, dass** längs des Bearbeitungsweges (3) mehrere Wegabschnitte vorliegen, in denen der Teig (2) zwischen voneinander unabhängig steuerbar angetriebenen Walzen (9, 10; 12, 15 bis 17; 13, 18 bis 21) geführt ist.

5. Vorrichtung nach Anspruch 4, **gekennzeichnet durch** mindestens einen Sensor (42 bis 44) zur Bestimmung einer Lage des Teigbandes (2) längs des Bearbeitungsweges (3).

6. Vorrichtung nach einem der Ansprüche 1 bis 5, **gekennzeichnet durch** eine Bemehlungseinrichtung (45) zur Bemehlung mindestens einiger der Walzen (9, 12, 18 bis 21).

7. Vorrichtung (1) nach einen der Ansprüche 1 bis 6, wobei der Teig zwischen Walzen (9, 10, 12, 15 bis 17, 13, 18 bis 21) mindestens eines Walzen-Paares hindurchgeführt wird,
- wobei mindestens eine der Walzen (10, 12) mit konkav ausgeführter Mantelfläche (24, 25) ausgeführt ist.

8. Vorrichtung nach Anspruch 7, **gekennzeichnet durch** einen Randwinkel (γ) der konkav ausgeführten Mantelfläche (24, 25), der größer ist als 2 °.

9. Vorrichtung nach Anspruch 7 oder 8, **dadurch gekennzeichnet, dass** beide Walzen (10, 12) eines Walzen-Paares mit konkav ausgeführter Mantelfläche (24, 25) ausgeführt sind.

## Claims

1. Device (1) for forming a dough sheet (2) from supplied dough portions,
- comprising a dough portions-supplying device (4),
- comprising a dough rolling mill (8),
- comprising a dough sheet removal device (41),
- wherein the dough rolling mill (8) comprises at least two superposed main rollers (12, 13) which rotate around horizontal axes of rotation (14, 14a),
- wherein the main rollers (12, 13) predefine a dough processing path (3) in such a manner
-- that the dough sheet (2) is initially guided into a pressing portion between a first main roller (12) and at least one counter-pressure roller (10, 15 to 17) and then in a further pressing portion between a second main roller (13) and at least one further counter-pressure roller (18 to 21),
-- that the dough processing path (3) has a turning point (W) between the main rollers (12, 13), and
-- that a dough wrap-around angle (α, β) around each of the two main rollers (12, 13) is greater than 90°,
- **characterized in that** the device (1) for forming a dough sheet (2) is configured so that, when rolling out the dough sheet (2), both sides of the sheet come to lie in the same manner on one of the main rollers (12, 13) once on the outside and once on the inside, wherein a multiplicity of counter-pressure rollers (10, 15 to 17; 18 to 21) arranged consecutively in the dough processing path (3) is assigned to at least one of the main rollers (12, 13).

2. Device according to Claim 1, **characterized in that** a distance (A₁ to A₄; B₁ to B₄) between the main roller (12, 13) and a leading counter-pressure roller (10; 18) in the dough processing path (3) is greater than the distance between the main roller (12, 13) and a following counter-pressure roller (15 to 17; 19 to 21) in the dough processing path (3).

3. Device according to Claim 1 or 2, **characterized in that** a plurality of counter-pressure rollers (15 to 17; 18 to 21), which are assigned to one of the main rollers (12, 13), are rotatably drivable via a common roller drive (38, 39).

4. Device according to one of Claims 1 to 3, **characterized in that** a plurality of path portions are present along the processing path (3), into which the dough (2) is guided between driven rollers (9, 10; 12, 15 to 17; 13, 18 to 21) which can be controlled independently of one another.

5. Device according to Claim 4, **characterized by** at least one sensor (42 to 44) for determining a position of the dough sheet (2) along the processing path (3).

6. Device according to one of Claims 1 to 5, **characterized by** a flouring device (45) for flouring at least some of the rollers (9, 12, 18 to 21).

7. Device (1) according to one of Claims 1 to 6, wherein the dough is guided between rollers (9, 10, 12, 15 to 17, 13, 18 to 21) of at least one roller pair,
- wherein at least one of the rollers (10, 12) is implemented with a concavely executed lateral surface (24, 25).

8. Device according to Claim 7, **characterized by** an edge angle (γ) of the concavely executed lateral surface (24, 25) which is greater than 2°.

9. Device according to Claim 7 or 8, **characterized in that** both rollers (10, 12) of a roller pair are implemented with a concavely executed lateral surface (24, 25).

## Revendications

1. Dispositif (1) permettant de former une bande de pâte (2) à partir des portions de pâte amenées, comportant
- un dispositif d'amenée de pâte (4),
- un laminoir à pâte (8),
- un dispositif de décharge de bande de pâte (41),
- le laminoir à pâte (8) comprenant au moins deux rouleaux principaux (12, 13) superposés tournant autour d'axes de rotation horizontaux (14, 14a),
- les rouleaux principaux (12, 13) définissant un chemin de traitement de pâte (3) de telle manière
-- que la bande de pâte (2) est guidée d'abord dans une section de pression entre un premier rouleau principal (12) et au moins un rouleau de contre-pression (10, 15 à 17), puis dans une autre section de pression entre un second rouleau principal (13) et au moins un autre rouleau de contre-pression (18 à 21),
-- que le chemin de traitement de pâte (3) comporte un point de retournement (W) dans le trajet entre les rouleaux principaux (12, 13), et
- qu'un angle d'enroulement de pâte (α, β) autour de chacun des deux rouleaux principaux (12, 13) soit supérieur à 90°,
- **caractérisé en ce que** le dispositif (1) permettant de former la bande de pâte (2) est conçu de telle sorte que, lorsque la bande de pâte (2) est déroulée, les deux côtés de la bande viennent reposer de la même manière une fois à l'extérieur et une fois à l'intérieur sur l'un des deux rouleaux principaux (12, 13), une pluralité de rouleaux de contre-pression (10, 15 à 17 ; 18 à 21) disposés en série dans le chemin de traitement de pâte (3) étant associés à au moins l'un des rouleaux principaux (12, 13).

2. Dispositif selon la revendication 1, **caractérisé en ce qu'**une distance (A₁ à A₄ ; B₁ à B₄) entre le rouleau principal (12, 13) et un rouleau de contre-pression (10 ; 18) menant dans le chemin de traitement de pâte (3) est supérieure à la distance entre le rouleau principal (12, 13) et un rouleau de contre-pression (15 à 17 ; 19 à 21) suivant dans le chemin de traitement de pâte (3).

3. Dispositif selon la revendication 1 ou 2, **caractérisé en ce que** plusieurs rouleaux de contre-pression (15 à 17 ; 18 à 21), qui sont associés à l'un des rouleaux principaux (12, 13), peuvent être entraînés en rotation par l'intermédiaire d'un entraînement de rouleaux (38, 39) commun.

4. Dispositif selon l'une des revendications 1 à 3, **caractérisé en ce que** le long du chemin de traitement (3), il est prévu plusieurs sections de chemin dans lesquelles la pâte (2) est guidée entre des rouleaux (9, 10 ; 12, 15 à 17 ; 13, 18 à 21) entraînés de manière indépendante et commandable.

5. Dispositif selon la revendication 4, **caractérisé par** au moins un capteur (42 à 44) permettant de déterminer la position de la bande de pâte (2) le long du chemin de traitement (3).

6. Dispositif selon l'une des revendications 1 à 5, **caractérisé par** un dispositif d'enfarinage (45) permettant d'enfariner au moins une partie des rouleaux (9, 12, 18 à 21).

7. Dispositif (1) selon l'une des revendications 1 à 6, dans lequel la pâte est passée entre des rouleaux (9, 10, 12, 15 à 17, 13, 18 à 21) d'au moins une paire de rouleaux,
- au moins l'un des rouleaux (10, 12) comportant une surface d'enveloppe (24, 25) concave.

8. Dispositif selon la revendication 7, **caractérisé par** un angle de bord (γ) de la surface d'enveloppe (24, 25) concave qui est supérieur à 2°.

9. Dispositif selon la revendication 7 ou 8, **caractérisé en ce que** les deux rouleaux (10, 12) d'une paire de rouleaux comportent une surface d'enveloppe (24, 25) concave.
